## Europäisches Patentamt

(19) **European Patent Office**

**Office européen des brevets**

(11) Publication number: **0 034 127**
**B1**

(12) # EUROPEAN PATENT SPECIFICATION

(45) Date of publication of patent specification: **04.07.84**

(51) Int. Cl.³: **A 47 J 31/54**

(21) Application number: **81830013.9**

(22) Date of filing: **26.01.81**

(54) Espresso coffee machine.

(30) Priority: **01.02.80 IT 1963080**

(43) Date of publication of application:
**19.08.81 Bulletin 81/33**

(45) Publication of the grant of the patent:
**04.07.84 Bulletin 84/27**

(84) Designated Contracting States:
**AT BE CH DE FR GB LI NL SE**

(56) References cited:
**CH - A - 177 917**
**CH - A - 386 071**
**FR - A - 1 142 840**
**FR - A - 1 354 095**
**FR - A - 2 124 943**
**GB - A - 1 024 601**
**GB - A - 1 346 839**

(73) Proprietor: **Nuova Faema S.p.A.**
**15, via Ventura**
**I-20134 Milan (IT)**

(72) Inventor: **Cighetti, Paolo**
**21/6, Via Sempione**
**I-20020 Arese (Milan) (IT)**

(74) Representative: **Perani, Aurelio et al,**
**c/o JACOBACCI-CASETTA & PERANI S.N.C. Via**
**Visconti di Modrone 7**
**I-20122 Milano (IT)**

Courier Press, Leamington Spa, England.

## Description

The present invention relates to an espresso coffee machine of the type having a boiler containing water and steam and having at least one spout, from which hot water and/or steam is withdrawn to make infusions.

It is known, in fact, that espresso coffee machines, as well as having the principal function of supplying cups of espresso coffee, also have other functions, such as providing hot water and steam. The availability of hot water enables infusions such as tea, camomile tea and the like to be made with hot water withdrawn from the boiler. The availability of steam allows the withdrawal of steam from the boiler through a suitable spout used for example, for scalding milk or alcoholic drinks.

After a withdrawal of hot water from known espresso coffee machines currently in use, a corresponding refilling with cold water occurs with the disadvantage that the cups of coffee supplied subsequently have a poorer taste, aroma and appearance. This deterioration in the organoleptic characteristics of the cup of coffee supplied immediately after a refilling with cold water is more noticeable the more substantial the refilling itself. This problem is particularly apparent since, in the case of espresso coffee the consumer is known to be particularly exacting and indisposed to tolerate a quality less than excellent.

In order to overcome this problem, it has been proposed to increase the size of the boiler so that the greater quantity of water contained therein reduces the lowering in temperature after a given withdrawal of hot water and corresponding refilling with cold water. This proposal, which clearly reduces the problem but does not eliminate it, leads to increased cost, and can sometimes result in the boiler falling within a higher category in the classification of pressure receptacles.

It has also been proposed to enlarge the means for heating the boiler, for example, by increasing the power of the electrical heating resistance, thus reducing the time necessary to bring the temperature of the water in the boiler back to the required temperature after refilling.

However, if the heating power of the boiler is increased, the temperature of the water at each withdrawal could result as being higher than that normally required for obtaining a good taste in the beverage.

It has been therefore proposed to make use of an auxiliary tank, normally containing warm water, and a heat exchanger placed inside that tank and to feed the exchanger with hot water coming from the boiler during each withdrawal for making a beverage.

The temperature of water which is withdrawn through the exchanger and thus cooled, could, in such a way, be somewhat controlled. Examples of this technology are shown in Swiss Patent No. 177,917 and in French Patent No. 1,142,840.

This proposal, like the preceding one, reduces the problem, but does not eliminate it completely, and results in espresso coffee machines having a greater power rating with higher consumer prices as a consequence.

The problem at the root of the present invention is that of devising an espresso coffee machine having structural and functional characteristics such as to overcome the cited disadvantages of the prior art.

This problem is solved by an espresso coffee machine of the type specified above, characterised in that it includes an auxiliary tank which is connected to the main water supply and to the boiler for refilling the latter after withdrawals of water, and a heat exchanger in the boiler, having an inlet and an outlet connected respectively to the lower portion and to the upper portion of said auxiliary tank for heating the water of the auxiliary tank by thermosiphon circulation.

Further characteristics and advantages of the espresso coffee machine according to the present invention will emerge from the following description of a preferred embodiment, given by way of non-limiting example, with reference to the single appended drawing, which represents schematically an espresso coffee machine according to the present invention.

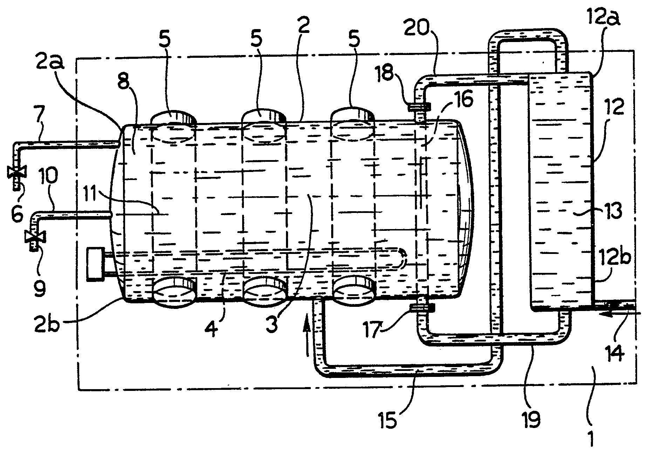

Referring to the appended drawing, an espresso coffee machine, generally indicated 1, has a boiler 2 containing water and steam 3, and provided with heating means constituted, in the example illustrated, by an electrical resistance 4 for bringing the water-steam to a desired temperature and maintaining it at that temperature. The machine 1 includes a plurality of heat exchangers 5 associated with the boiler 2 each being connected to a respective coffee unit of conventional type for supplying espresso coffee.

The machine also has a spout 6 in fluid communication by means of a tube 7, with an upper portion 2a of the boiler 2 containing steam 8. This spout 6 can supply the steam necessary, for example, for scalding milk or alcoholic drinks. The machine 1 has a further spout 9 in fluid communication, by means of a tube 10, with a lower portion 2b the boiler 2 containing water 11. The hot water, necessary, for example, for making infusions (tea, camomile tea and the like) is withdrawn through the spout 9.

The espresso coffee machine 1 according to the invention includes an auxiliary tank 12 containing water 13. The tank 12 is connected through a tube 14 to the mains water supply (not shown in the Figure) and through a tube 15 to the boiler 2. The tube 15, to advantage, leaves the tank 12 from its upper portion 12a and enters the boiler 2 through its lower portion 2b. The tube 14, carrying cold water from the mains, enters the lower portion 12*b* of the auxiliary tank 12.

The machine 1 further includes a heat exchanger 16 which is associated with the boiler 2 and has an inlet 17 and an outlet 18 connected through respective tubes 19, 20 to the lower portion 12*b* and the upper portion 12*a* respectively of the auxiliary tank 12 so as to pass through the auxiliary tank 12 in conformity with the natural thermosiphon circulation. Thus, heat is passed from the steam 3 in the boiler 2 to the water 13 in the auxiliary tank 12 by means of the heat exchanger 16.

The operation of the espresso coffee machine according to the present invention is described below with reference to an initial condition existing a long time after a large withdrawl of hot water and corresponding refilling with cold water. Under these conditions it may be supposed that the steam 3 and the water 13 are both at the same high temperature required.

A substantial withdrawal of hot water through the spout 9 is then effected, for example, to make tea for one person. At the same time, the boiler 2 is refilled with an equal quantity of water at substantially the same temperature through the tube 15 from the auxiliary tank 12, while the auxiliary tank 12 is, in its turn, refilled with cold water from the mains supply through the tube 14. Thus, clearly, the refilling with cold water results in a fall in temperature of the water in the auxiliary tank 12 only, while the water in the boiler remains at substantially the same temperature as initially. By virtue of this feature, it is possible to supply a cup of espresso coffee of excellent quality even immediately after the withdrawal of a substantial quantity of water from the machine and its immediate, complete refilling.

Subsequently, the operation of the heat exchanger 16 ensures that a predetermined quantity of heat per unit time passes from the water-steam 3 to the water 13, so that the latter is gradually brought back to the initial temperature, while the electrical resistance 4 gradually supplies an equal quantity of heat to the water-steam 3. In this way, the initial conditions are again achieved after a time interval considerably less than that which is usually necessary after a substantial refilling with cold water.

The main advantage of the espresso coffee machine according to the present invention over the known machines currently in use lies in the fact that it ensures a supply of espresso coffee of excellent and consistent quality during the whole of its period of operation for the same boiler size and power.

## Claim

An espresso coffee machine of the type having a boiler (2) containing water and steam (3) and having at least one spout (6, 9) from which hot water and/or steam is withdrawn to make infusions, characterised in that it includes an auxiliary tank (12) which is connected to the main water supply (14) and to the boiler (2) for refilling the latter after withdrawals of water, and a heat exchanger (16) in the boiler (2), having an inlet (17) and an outlet (18) connected respectively to the lower portion (12b) and to the upper portion (12a) of said auxiliary tank (12) for heating the water (13) of the auxiliary tank (12) by thermosiphon circulation.

## Patentanspruch

Eine Expresso-Kaffeemaschine des Typs mit Boiler (2) enthaltend Wasser und Dampf (3), und mit mindestens einem Hahn (6, 9) aus welchem Wasser und/oder Dampf strömen zur Zubereitung von Aufgüssen, dadurch gekennzeichnet, daß sie mit einem Zusatztank (12) ausgerüstet ist, der an der Wasserzuleitung und an dem Boiler (2) angeschloßen ist, um letzteren nach Wasserbeabzug wieder aufzufüllen, und bestückt mit einem Wärmetauscher (16) im Boiler (2) dessen Einlaß (17) mit dem unteren Teil (12b) und dessen Auslaß (18) mit dem oberen Teil (12a) von besagtem Zusatztank (12) verbunden ist zum Aufheizen des Wassers (13) im Zusatztank (12) mittels thermosiphonischem Kreislauf.

## Revendication

Machine pour le café express, du type comprenant un bouilleur (2) qui contient eau et vapeur (3) et est pourvu au moins d'une prise (6, 9) de la quelle eau chaude et/ou vapeur est prélevé pour faire des infusions, caractérisée en ce qu'elle comprend un réservoir auxiliaire (12) qui est relié au réseau de distribution de l'eau (14) et au bouilleur (2) pour le remplir après les prélevéments d'eau, et un échangeur de chaleur (16) dans le bouilleur (2), ayant une entrée (17) et une sortie (18) reliées respectivement à la partie inferieure (12b) et à la partie superieure (12a) du réservoir auxiliaire (12) pour échauffer l'eau (13) du réservoir auxiliaire (12) par circulation à thermosiphon.